(19) Europäisches Patentamt
European Patent Office
Office européen des brevets

(11) Publication number: 0 067 550
A1

# (12) EUROPEAN PATENT APPLICATION

(21) Application number: 82302562.2

(22) Date of filing: 20.05.82

(51) Int. Cl.³: C 08 L 23/04
C 08 K 5/44

(30) Priority: 21.05.81 CA 378029

(43) Date of publication of application:
22.12.82 Bulletin 82/51

(84) Designated Contracting States:
AT BE CH DE FR GB IT LI LU NL SE

(71) Applicant: UNION CARBIDE CANADA LIMITED
123 Eglinton Avenue East
Toronto Ontario, M4P 1J3(CA)

(72) Inventor: Ilahie, Muhammad Younus
1072 Giffard Street
St. Bruno Quebec J3V 4Y8(CA)

(72) Inventor: Bakerdjian, Zaven
2250 Stevens Street
Quebec H4M 1G9(CA)

(74) Representative: McCall, John Douglas et al,
W.P. THOMPSON & CO. Coopers Building Church Street
Liverpool L1 3AB(GB)

## (54) Polyolefin compositions.

(57) There is disclosed a film forming polyolefin composition having improved melt fracture characteristics which comprises a high pressure polymer of an alpha olefin together with from 0.0001 to 3.0 PPHR of certain organo-phosphorous compounds.

EP 0 067 550 A1

Croydon Printing Company Ltd.

DESCRIPTION

## POLYOLEFIN COMPOSITIONS

This invention relates to a polyolefin film forming composition. More particularly it relates to a film forming composition comprising a high pressure polyolefin and mixtures of high pressure and low pressure polyolefin having reduced "melt fracture" characteristics.

Low pressure polyethylene produced by a low temperature and low pressure process in the presence of an organo-metallic catalyst, such as Ziegler type catalysts has improved performance characteristics over high pressure polyethylene produced by a high temperature and high pressure process using air, peroxides or azo-compounds as catalysts. In the film extrusion of polyethylene however, it was found that low pressure polyethylene sustains severe film melt fracture when extruded on a conventional blown film line under conventional conditions. Such melt fractured films not only lose their expected advantages in strength and mechanical and functional properties over high pressure polyethylene but also exhibit aesthetically unacceptable surface finishes.

"Melt fracture" is a term well known in the art for certain characteristics of extruded film such as loss of strength, lack of surface smoothness and overall poor aesthetic appearance.

Previous approaches for reducing the problem of melt fracture in low pressure polyethylene involved modifying the molecular structure of the resin or use of elevated extrusion temperatures or modifications in the equipment such as by enlarging the die gaps in the extrusion die to reduce the critical shear rate and then drawing down the film to the required gauge. However, modifying the molecular structure of the resin such as broadening the molecular weight distribution tends to

BAD ORIGINAL

detract from the physical properties of the resulting film. Higher processing temperatures reduce the productivity of the film extrusion line since additional post-extrusion cooling is required to solidify the film. Modifications to the film blowing equipment would be expensive and would require equipment changes when the extrusion line is changed to another film forming composition.

It is known that some physical property advantages such as stiffness, tensile strength, yield strength, tensile elongation, puncture resistance and resistance to tear initiation are realized in films extruded from polyethylene compositions consisting of mixtures of low pressure polyethylene and high pressure polyethylene. However, such mixtures also have some of the melt fracture characteristics at unacceptably low outputs mentioned above. The conventional approaches for reducing the problem of melt fracture and their accompanying drawbacks are also mentioned above. Similarly melt fracture problems have been encountered with high pressure polyolefins such as polyethylene. It was found that this problem can be effectively reduced in high pressure polyolefin as well, by means of the present invention.

It is an object of this invention to provide a film forming composition comprising an olefin resin consisting of high pressure polyolefin or mixtures of high pressure and low pressure polyolefin having reduced melt fracture characteristics.

The objects of this invention are achieved by adding a small amount of an organo-phosphorous compound into the olefin resin. The organo-phosphorous compounds useful in this invention may be any one of the general formulas selected from the group consisting of:

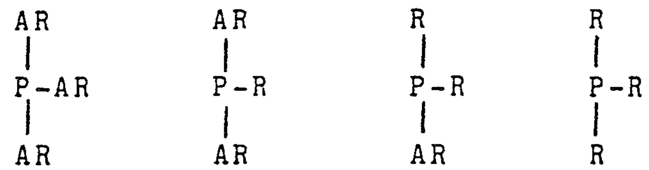

wherein A is selected from the group consisting of -O-, -S- and $-SCH_2COO-$; and wherein R is a radical selected from the group consisting of aryl, alkaryl, and aliphatic groups containing from 8 to about 20 carbon atoms and at least one R being a hydrocarbyl radical. The preferred organo-phosphorous compound is a phosphite or phosphenite containing three hydrocarbyl radicals which may be the same or different. The most preferred hydrocarbyl phosphites are trisnonylphenylphosphite, tris (2,4-ditertiary butylphenylphosphite), 1 bis (2,4, di-tertbutylphenyl) pentaerythritol diphosphite and cyclocneopentanetetra aryl bis (octadecyl phosphite). The most preferred hydrocarbylphosphonite is tetrakis (2,4-ditertbutylphenyl)-4,4'-biphenylenediphosphonite.

The above organo-phosphorous compounds are mixed into the olefin resin in amounts to effectively reduce melt fracture at critical output. These amounts were found to be in a preferred range of from 0.001 to 0.5 parts per hundred parts of weight of the resin (PPHR), but a range as broad as 0.0001 to 3.0 PPHR can be used. The most effective amount within this range depends on the particular organo-phosphorous compound and the polyolefin composition used.

It must be appreciated that the polyethylene film forming compositions may include other additives if desired, such as ultra violet, oxidative and thermal stabilizers, slip and anti-block modifiers, pigments, lubricants and anti-static agents, etc.

The low pressure polyolefin used in the mixtures of this invention is essentially a copolymer of ethylene and an alpha olefin containing from 3 to 10 carbon atoms. Such comonomers include propylene, 1-butene, 1-pentene, 1-methylpentene, 1-hexene, 1-heptene,

1-octene and combinations thereof. The preferred polyolefin is polyethylene which has a typical density range of from 0.910 $g/cm^3$ to 0.970 $g/cm^3$. The preferred density range is from 0.915 $g/cm^3$ to 0.930 $g/cm^3$.

The high pressure polyolefin suitable for the film forming composition is preferably a homopolymer or of an alpha olefin having a density range of from 0.910 $g/cm^3$ to 0.935 $g/cm^3$. In addition certain ethylene copolymers (e.g. ethylene vinyl acetate) and blends of ethylene homopolymers and copolymers have been found to be suitable. Other functional groups such as ethyl acrylate and carbon monoxide may be substituted for vinyl acetate. The most preferred high pressure polyolefin is polyethylene.

The invention will be further illustrated by reference to the accompanying drawings, in which:

Figure 1 is a graphic illustration showing the critical output rate of various mixtures of low pressure polyethylene, high pressure polyethylene and trisnonylphenylphosphite.

Figure 2 is a graphic illustration showing the critical output of a composition comprising a mixture of 25% low pressure polyethylene and 75% high pressure polyethylene having various organo-phosphorous compounds in the total composition.

In Figure 1, the lower curve shows the critical output rate at the onset of melt fracture of various mixtures of low pressure polyethylene having a density of 0.918 $g/cm^3$ together with conventional low density polyethylene having a melt index of 0.8 dg/min and density of 0.918 $g/cm^3$. This mixture did not contain any organo-phosphorous compound. It can be observed that even in mixtures containing as much as 90% high pressure polyethylene, melt fracture occurs at the relatively low critical output rate of 38 lbs/h. In

contrast, the upper curve in Figure 1 shows considerable improvement in critical output rate when even amounts as low as 0.15 PPHR of WESTON 399* (a trade mark of Borg-Warner Corp. for trisnonylphenylphosphite) are added to the composition. Thus even at a 50% concentration of low pressure polyethylene, the inclusion of 0.25% by weight of WESTON 399* so improves the composition that melt fracture does not occur until the critical output rate of 58.8 lbs/h.

Figure 2 shows the effects of three of the preferred embodiments of organo-phosphorous compounds on the melt fracture characteristics of a mixture of 25% low pressure polyethylene having a density of 0.918 $g/cm^3$ and 75% high pressure polyethylene having a density of 0.918 $g/cm^3$. The results are shown in detail in Examples 3, 4 and 5. In addition to WESTON 399* the other organophosphorous compounds shown are SANDOSTAB P-EPQ* (a trade mark of Sandoz Corp. for tetrakis (2,4-di-tertbutylphenyl)-4,4'-biphenylenediphosphenite) and IRGAFOS 168* (a trade mark of Ciba-Geigy Corp. for tris (2,4-ditertiarybutyl phenylphosphite)

The organo-phosphorous compounds were introduced into the film forming composition in finely divided form in a manner well known in the art, such as dry or solution blending, extrusion blending or melt compounding.

The Rate of output at the onset of melt fracture which is defined as the critical output rate was determined using a blown film extrusion machine having the following specifications.

2.5 inch, Black & Clawson extruder
26/1 L/D Screw with Maddock Mixing Section
5 in spiral mandrel extrusion die
27 mils Die Gap

* Trade Mark

The following typical experimental conditions were used:

An extruder barrel temperature profile in degrees Fahrenheit:

Zone 1 - 385° Zone 3 - 365°

Zone 2 - 375° Zone 4 - 360°

A die temperature in degrees Fahrenheit

Zone 1 - 380° Zone 2 - 390°

Melt temperatures 385-400°F

Frost Line Height: 12 in

Film Thickness: 1.5 mils

Blow Ratio (layflat width/die diameter) : 3.5/1

Critical output for each composition was determined by starting the extruder at the minimum output (6.5 lbs/h) and gradually increasing the output to the point where melt fracture was observed by the naked eye on the extruded film. At this point the melt temperatures were measured.

Example 1

A number of film forming compositions comprising low pressure polyethylene (LPP) and high pressure polyethylene (HPP) were mixed in various weight percentage ratios. No organo-phosphorous compounds were added to any of these mixtures. Film was produced and the critical output ratio at which melt fracture occurred was measured in the manner described above. The results which are illustrated in the lower curve of Figure 1 are set forth below:

| LPP Weight, % | HPP Weight, % | Critical Output lbs/h |
|---|---|---|
| 100 | 0 | 11.0 |
| 90 | 10 | 9.0 |
| 25 | 75 | 13.2 |
| 50 | 50 | 7.0 |
| 10 | 90 | 38.0 |
| 8 | 92 | 105.2 |
| 4 | 96 | 126.8 |

| LPP Weight, % | HPP Weight, % | Critical Output lbs/h |
|---|---|---|
| 2 | 98 | 139.0 |
| 0 | 100 | 149.5 |

Example 2

In this example, the effects of various concentrations of WESTON 399* (trisnonylphenylphosphite) on the melt fracture characteristics of compositions containing various weight percent ratios of the low pressure polyethylene (LLP) and high pressure polyethylene (HPP) of Example 1 were observed and the critical output ratio at the point of melt fracture noted. The results are illustrated in the upper curve of Figure 1 and are set out below:

| LPP Weight, % | HPP Weight % | Weston 399* Weight PPHR | Critical Output lbs/h |
|---|---|---|---|
| 7.14 | 98.82 | .428 | 151.0 |
| 0.00 | 100.00 | 0.25 | 203.0 |
| 42.8 | 56.2 | 0.428 | 86.4 |
| 25.0 | 75.0 | 0.25 | 119.0 |
| 25.0 | 75.0 | 0.25 | 115.5 |
| 25.0 | 75.0 | 0 | 14.0 |
| 50.0 | 50.0 | 0.25 | 58.8 |
| 42.8 | 57.2 | 0.0714 | 7.4 |
| 7.14 | 92.86 | 0.0714 | 105.2 |
| 25.0 | 75.0 | 0.25 | 113.1 |
| 25.0 | 75.0 | 0.5 | 19.6 |
| 25.0 | 75.0 | 0.25 | 114.0 |

Example 3

This is a further example showing the effect of various concentrations of WESTON 399* on the melt fracture characteristics of a mixture containing 25% by weight of low pressure polyethylene (LPP), the remainder being high pressure polyethylene (HPP). The effect of the addition of the organo-phosphorous compound was

* Trade Mark

observed and the critical output rate at the point of melt fracture was noted. These results are illustrated below.

| LPP Weight, % | HPP Weight % | Weston 399* Weight PPHR | Critical Output lbs/h |
|---|---|---|---|
| 25 | 75.0 | 0.1 | 60.0 |
| 25 | 75.0 | 0.15 | 105.7 |
| 25 | 75.0 | 0.25 | 119.0 |
| 25 | 75.0 | 0.35 | 43.9 |
| 25 | 75.0 | 0.50 | 19.6 |
| 25 | 75.0 | 0.0 | 14.0 |

Example 4

In this experiment, the effect of various concentrations of SANDOSTAB P-EPQ* (tetrakis(2-4-di-tert-butylphenyl)-4,4'-byphenylenediphosphenite) on the melt fracture characteristics of a mixture containing 25% by weight of low pressure polyethylene (LPP), the remainder being high pressure polyethylene (HPP). The effect of the addition of the organo-phosphorous compound was observed and the critical output rate at the point of melt fracture noted. These results are illustrated in the far left hand curve in Figure 2 and are set out below:

| LPP Weight, % | HPP Weight, % | Sandostab P-EPQ* PPHR | Critical Output, lbs/h |
|---|---|---|---|
| 25 | 75.0 | 0.15 | 17.4 |
| 25 | 75.0 | 0.05 | 21.9 |
| 25 | 75.0 | 0.01 | 50.2 |
| 25 | 75.0 | 0.005 | 73.5 |
| 25 | 75.0 | 0.002 | 111.0 |
| 25 | 75.0 | 0.001 | 113.0 |
| 25 | 75.0 | 0.0 | 13.2 |

Example 5

In this experiment, the effect of various concentrations of IRGAFOS 168* (tris(2,4-ditertiarybutyl-

* Trade Mark

phenylphosphite) on the melt fracture characteristics of a mixture containing 25% by weight of low pressure polyethylene (LPP) the remainder being high pressure polyethylene (HPP). The effect of the addition of the organophosphorous compound was observed and the critical output rate at the point of melt fracture noted. These results are illustrated in the centre curve of Figure 2 and are set out below:

| LPP Weight, % | HPP Weight, % | Irgafos 168* Weight, PPHR | Critical Output lbs/h |
|---|---|---|---|
| 25 | 75.0 | 0.15 | 7.5 |
| 25 | 75.0 | 0.05 | 45.2 |
| 25 | 75.0 | 0.02 | 71.6 |
| 25 | 75.0 | 0.01 | 93.0 |
| 25 | 75.0 | 0.005 | 120.0 |
| 25 | 75.0 | 0.002 | 49.5 |
| 25 | 75.0 | 0.0 | 13.2 |

While the invention is described in connection with the specific examples given above, it is to be understood that those are for purposes of illustration only. Many alternatives in respect to the particular organo-phosphorous compound may be made and other low pressure mono-unsaturated acylic alpha-olefins can be substituted for low pressure polyethylene (LPP).

## CLAIMS

1. A film forming polyolefin composition characterised by comprising an olefin resin comprising a high pressure polymer of an alpha olefin having a density of from 0.910 g/$cm^3$ to 0.935 g/$cm^3$ and from 0.0001 to 3.0 parts per hundred parts by weight of said resin of an organo-phosphorous compound having a general formula selected from the group consisting of:

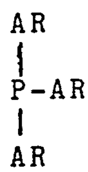 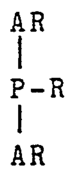 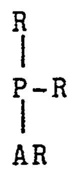 and 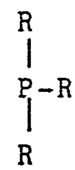

wherein A is selected from the group consising of -O-, -S-, and -$SCH_2COO$, and wherein each R independently is a radical selected from the group consisting of aryl, alkaryl and aliphatic groups containing from 8 to 20 carbon atoms and at least one R being a hydrocarbonyl radical.

2. A film forming polyolefin composition as claimed in claim 1, characterised in that said olefin resin comprises a mixture of from 5% to 95% by weight of a low pressure polymer of an alpha olefin having a density of from 0.910 g/$cm^3$ to 0.970 g/$cm^3$, the remainder of said mixture being a high pressure polymer of an alpha olefin having a density of from 0.910 g/$cm^3$ to 0.935 g/$cm^3$.

3. A film forming polyolefin composition as claimed in claim 1, characterised in that said olefin resin comprises a mixture of from 5% to 50% by weight of said low pressure polymer and the remainder of said mixture being said high pressure polymer.

4. A film forming composition as claimed in claim 2 or 3, wherein the low pressure polymer of an alpha olefin is polyethylene.

5. A film forming composition as claimed in claim 4, characterised in that the low pressure polymer of an

alpha olefin is linear low density polyethylene.

6. A film forming polyolefin composition as claimed in any of claims 2 to 5, characterised in that said low pressure polymer has a density of from 0.915 $g/cm^3$ to 0.930 $g/cm^3$.

7. A film forming composition as claimed in any one of the preceding claims, characterised in that the high pressure polymer of an alpha olefin is polyethylene.

8. A film forming polyolefin composition as claimed in any one of the preceding claims, characterised in that said organo-phosphorus compound is tetrakis (2,4-di-tert-butylphenyl) 4,4'-biphenylenediphosphenite, tris (2,4-ditertiary-butyl-phenylphosphite), trisnonylphenylphosphite, or tetrakis (2,4-di-tert-butylphenyl) 4,4'-biphenyldiphosphenite.

9. A film forming polyolefin composition as claimed in any one of the preceding claims, in which said organo-phosphorous compound is present in an amount of from 0.001 to 0.5 parts per hundred parts by weight of said resin (PPHR).

10. A film forming polyolefin composition as claimed in any one of the preceding claims, wherein said organo-phosphorous compound is present in an amount of from 0.001 to 0.2 (PPHR).

11. A film characterised by being formed from a composition as claimed in any one of the preceding claims.

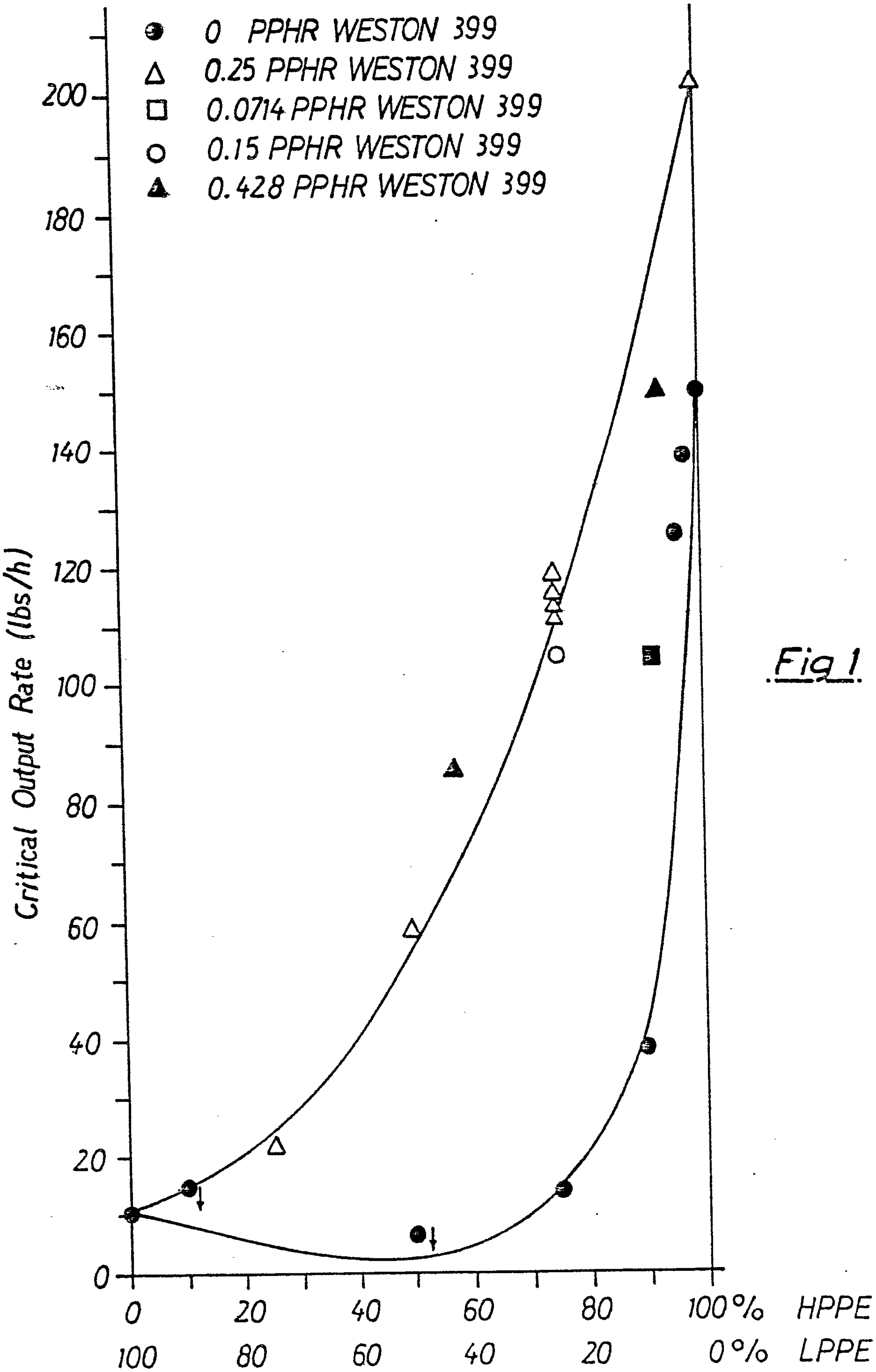
0 PPHR WESTON 399
0.25 PPHR WESTON 399
0.0714 PPHR WESTON 399
0.15 PPHR WESTON 399
0.428 PPHR WESTON 399
Critical Output Rate (lbs/h)
0
20
40
60
80
100
120
140
160
180
200
0
20
40
60
80
100% HPPE
100
80
60
40
20
0% LPPE

Fig 1

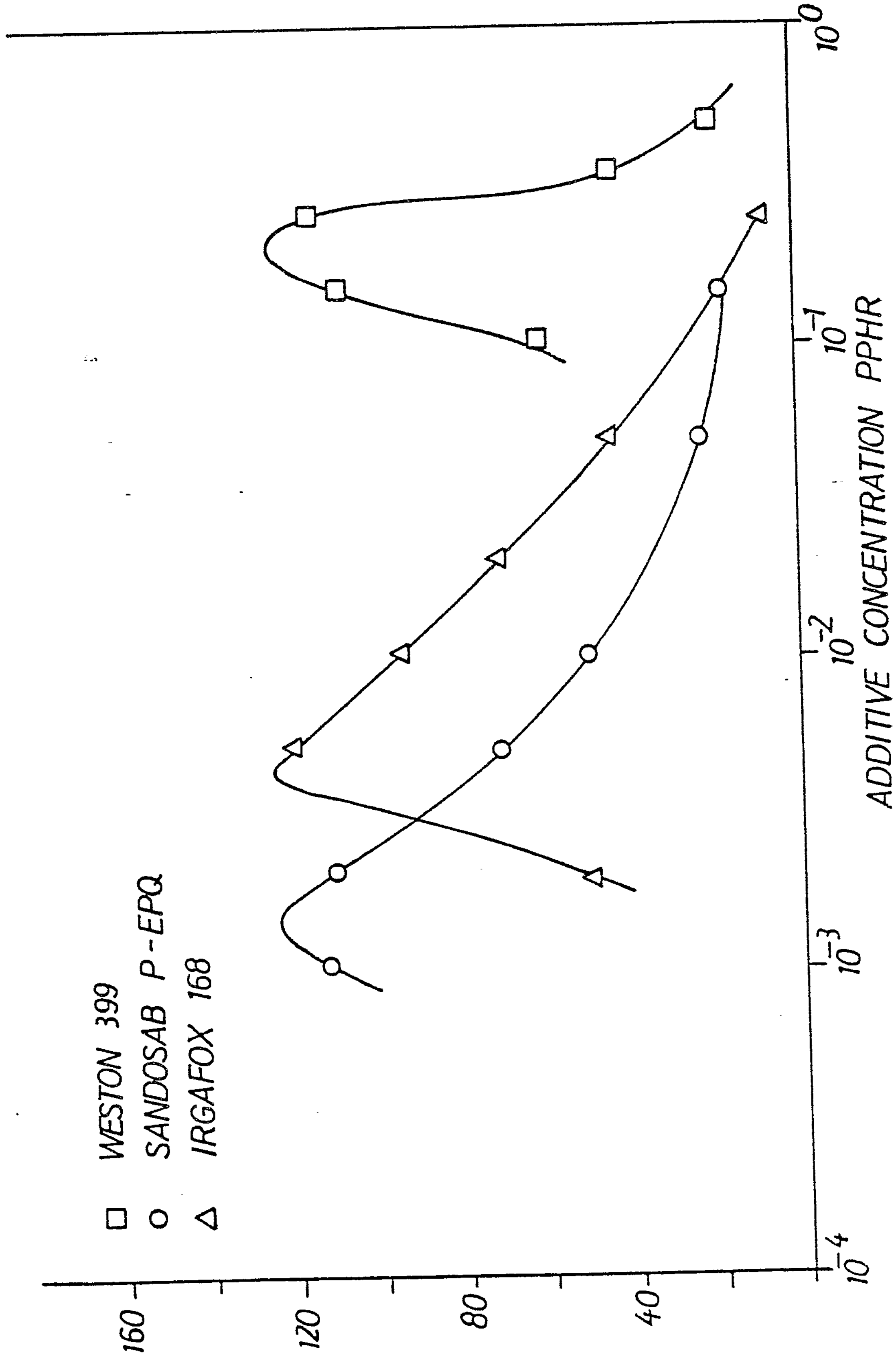
□ WESTON 399
○ SANDOSAB P-EPQ
△ IRGAFOX 168
160
120
80
40
$10^{-4}$
$10^{-3}$
$10^{-2}$
$10^{-1}$
$10^{0}$
ADDITIVE CONCENTRATION PPHR

Fig 2

0067550

European Patent Office

# EUROPEAN SEARCH REPORT

Application number
EP 82 30 2562

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | KUNSTSTOFFE, vol.67, no.11, November 1977, F. MITTERHOFER: "Verarbeitungs-stabilisatoren für Polyäthylen", pages 684-687 | 1-11 | C 08 L 23/04<br>C 08 K 5/49 |
| X | US-A-3 354 118 (O. MAUZ) * claim 1; column 3, line 73 - column 4, line 5 * | 1-11 | |
| X | DE-B-1 237 312 (PURE CHEMICALS) * claims 1,2 * | 1-11 | |
| X | FR-A-2 221 460 (BORG-WARNER) * claim 1; page 3, lines 13-21 * & US - A - 3 839 507 | 1-11 | |

TECHNICAL FIELDS SEARCHED (Int. Cl. 3)

C 08 L
C 08 K

The present search report has been drawn up for all claims

| Place of search | Date of completion of the search | Examiner |
|---|---|---|
| THE HAGUE | 09-09-1982 | GOOVAERTS R.E. |

CATEGORY OF CITED DOCUMENTS

X : particularly relevant if taken alone
Y : particularly relevant if combined with another document of the same category
A : technological background
O : non-written disclosure
P : intermediate document
T : theory or principle underlying the invention
E : earlier patent document, but published on, or after the filing date
D : document cited in the application
L : document cited for other reasons
& : member of the same patent family, corresponding document

EPO Form 1503. 03 82